# NOUVEAU FASCICULE DE BREVET EUROPEEN

(11) **EP 0 359 666 B2**
(45) Date de publication et mention de la décision concernant l'opposition: **25.06.1997**
(45) Mention de la délivrance du brevet: 25.11.1992
(21) Numéro de dépôt: 89402504.8
(22) Date de dépôt: 13.09.1989
(51) Int. Cl.: G01C 19/72

(54) **Dispositif de mesure à fibre optique, gyromètre, centrale de navigation et de stabilisation**
Fiberoptische Messeinrichtung, Gyrometer, Navigations- und Stabilisationssystem
Fibre-optical measuring system, gyrometer, navigation and stabilization system

(30) Priorité: 14.09.1988 FR 8811978
(43) Date de publication de la demande: 21.03.1990
(73) Titulaire: PHOTONETICS S.A., 78160 Marly le Roi (FR)
(72) Inventeur: Arditty, Hervé Jacques, F-78160 Marly Le Roi (FR); Martin, Philippe, F-78190 Pontchartrain (FR); Desforges, François Xavier, F-78330 Fontenay Le Fleury (FR); Graindorge, Philippe, F-21800 Crimolois (FR); Lefevre, Hervé, F-75013 Paris (FR)
(74) Mandataire: Phélip, Bruno

(56) Documents cités:
- EP-A- 0 168 292
- FR-A- 2 555 739
- OPTICS LETTERS, vol. 7, no. 4, avril 1982, pages 180-182, Optical Society of America; K. BÖHM et al.: "Sensitivity of a fiber-optic gyroscope to environmental magnetic fields"
- ELECTRONICS LETTERS, vol. 19, no. 23, 10 novembre 1983, pages 997-999; K. BÖHM et al.: "Direct rotation-rate detection with a fibre-optic gyro by using digital data processing"
- DGON Proceedings of Symposium Gyro Technology, Stuttgart, 1987, p. 3.0-3.19, Auch W. et al., "Product Development of a Fiber-Optic Rate Gyro"

## Description

L'invention concerne un dispositif de mesure à fibre optique permettant de mesurer la variation d'un paramètre qui produit des perturbations non réciproques dans un interféromètre en anneau de SAGNAC.

L'interféromètre de SAGNAC et les phénomènes physiques qu'il met en jeu sont bien connus. Dans un tel interféromètre une lame séparatrice ou autre dispositif séparateur divise une onde incidente. Les deux ondes contrapropagatrices ainsi créées se propagent en sens opposé le long d'un chemin optique fermé, se recombinent et produisent des interférences qui dépendent du déphasage des ondes lors de leur recombinaison.

A l'origine, le chemin optique fermé des interféromètres de SAGNAC était défini par des miroirs. Il est maintenant connu qu'il peut être constitué par une bobine multi-tours de fibre optique monomode.

Il est également connu que certains phénomènes physiques sont susceptibles de produire des perturbations, particulièrement des déphasages, non réciproques, sur les ondes contrapropagatives engendrant un déphasage relatif de ces ondes qui modifient leur état l'interférence lors de leur recombinaison.

La mesure de ce déphasage relatif permet de quantifier le phénomène physique qui l'a engendré.

Le principal phénomène physique susceptible de créer ces perturbations non réciproques est l'effet SAGNAC produit par la rotation de l'interféromètre par rapport à un axe perpendiculaire au plan de son chemin optique fermé. L'effet FARADAY ou effet magnéto-optique colinéaire est également connu comme produisant des effets non réciproques de ce type. Cela a par exemple été décrit dans un artide de la revue Optic Letters (Vol7, N°4, Avril 1982, pages 180-182) par K. BöHM. D'autres effets peuvent dans certaines conditions, produire également un déphasage non réciproque.

Au contraire, les variations de nombreux paramètres représentatifs de l'environnement qui sont souvent à l'origine de perturbations des mesures n'ont que des effets réciproques sur l'interféromètre de SAGNAC, ne perturbent pas le déphasage relatif entre les ondes contrapropagatives et n'ont donc pas d'influence sur la mesure du paramètre étudié. Tel est le cas des variations lentes de température, d'indices etc... qui modifient le chemin optique parcouru par les ondes, mais le modifient de manière réciproque.

De nombreux travaux ont été menés afin d'améliorer la sensibilité et la précision des mesures pouvant être réalisées avec un tel appareil de mesure. On pourra par exemple consulter le document FR 2 555 739 et la publication Electronics Letters (Vol, 19 N° 23, Novembre 1983 pages 997-999 Artide de K. BöHM).

En particulier, il a tout d'abord été constaté que la réponse fournie par l'interféromètre de SAGNAC est de la forme P = Po(1 + cos.Δφ) et donc que la sensibilité de ce signal au voisinage de la différence de phase Δφ = 0 est faible. Il a été proposé d'introduire une modulation de différence de phase, carrée d'amplitude de plus ou moins π/2 par exemple qui déplace le point de fonctionnement et produit un signal périodique dont l'amplitude est une fonction sinusoidal du paramètre mesuré et que l'on peut donc exploiter avec une plus grande sensibilité et stabilité.

Il a ensuite été montré que la précision de la mesure est améliorée par l'utilisation d'une méthode de zéro également appelée fonctionnement en boucle fermée. Selon cette méthode, un déphasage supplémentaire dit de contre-réaction Δφ_{A} est appliqué et sert à compenser le déphasage Δφ_{B} produit par le paramètre mesuré. La somme de ces deux déphasages Δφ_{A} etΔφ_{B} est maintenu nulle, ce qui permet de faire fonctionner l'interféromètre avec la précision maximum. La mesure est réalisée par l'exploitation du signal nécessaire à la production du déphasage de contre-réaction Δφ_{A}. Ainsi, la mesure est stable et linéaire.

L'asservissement peut être réalisé en générant des marches de phases d'une hauteur Δφ_{A} à chaque temps τ, τ étant le temps de propagation dans la bobine, le ou les modulateurs de phase étant placés aux extrémités de la bobine.

Le brevet européen EP 0 168 292 décrit un tel système de mesure. Selon le dispositif qu'il propose, le signal produit par une variation du paramètre mesuré produit une variation du signal de sortie du détecteur. L'amplitude de cette variation est extraite par des circuits de détection synchrone analogique qui après traitement analogique par un filtre PID (proportionnelle, intégrale, dérivée) assure dassiquement la stabilité de la boude d'asservissement Un convertisseur analogique-numérique donne la valeur numérique de la marche Δφ_{A} qui a été introduite pour assurer la compensation, s'y ajoutent un générateur de signal de commande qui a pour but d'élaborer une rampe numérique en marches d'escalier, et enfin un convertisseur numérique-analogique qui génère le signal d'attaque en retour du modulateur de phase, à partir de cette rampe.

Dans la recherche d'une sensibilité et d'une précision maximum de la mesure, les dispositifs de l'art antérieur présentent certains inconvénients :
. Une détection synchrone (aussi appelée démodulation) analogique comporte généralement une dérive du zéro en sortie et qui se traduit par une erreur sur la mesure.
. Le convertisseur analogique numérique nécessaire pour réaliser ce dispositif doit pouvoir traiter directement le déphasage de compensation. Il doit comporter un nombre de bits liés à l'amplitude maximale du signal à son entrée ce qui conduit en pratique pour qu'il ne limite pas la précision de la mesure à un convertisseur analogique numérique comportant de l'ordre de 18 bits.

L'objet de la présente invention est donc d'améliorer la précision et la sensibilité d'un dispositif de mesure à base d'un interféromètre en anneau de SAGNAC à fibre optique monomode.

C'est également un objectif dans un tel dispositif de mesure de s'affranchir des éventuelles dérives de zéro. C'est encore un objectif de la présente invention que de permettre l'obtention de mesure de qualité égale ou supérieure à celle, accessible par le dispositif de l'art antérieur, avec un convertisseur analogique-numérique moins sophistiqué.

Afin d'atteindre ces objectifs, l'invention concerne un dispositif de mesure à fibre optique, du type dans lequel la variation d'un paramètre engendre une différence de marche, comportant une source lumineuse quasi-monochromatique, un interféromètre en anneau de SAGNAC à fibre optique monomode, un photodétecteur, un modulateur de phase, un polariseur et un filtre spatial placés entre la source et l'interféromètre, des moyens électroniques commandant en contre-réaction le modulateur de phase en fonction du signal reçu du détecteur de telle sorte que, d'une part, la variation du signal d'erreur démodulé en fonction de la différence de marche au voisinage du zéro soit sinusoïdale, que, d'autre part, cette différence de marche soit maintenue nulle, et fournissant par exploitation du signal de commande du modulateur un signal fonction de la variation du paramètre mesuré.

Dans un tel dispositif, il est proposé que lesdits moyens électroniques comportent, dans l'ordre, un convertisseur analogique-numérique destiné à numériser le signal modulé émis par le détecteur, un système à traitement numérique exploitant le signal fourni par le convertisseur analogique-numérique et ramenant sa composante à la fréquence de la modulation autour du continu, un filtre numérique de boude d'asservissement alimenté par le signal sortant du système de traitement numérique, fournissant un signal représentatif du paramètre mesuré, un registre recevant le signal sortant du filtre numérique de boucle d'asservissement et fournissant un signal fonction du paramètre mesuré pour tout usage externe souhaité, un accumulateur alimenté par le signal sortant du registre, générant un signal numérique de contre-réaction qui peut en particulier être une rampe dont la pente est fonction de la vitesse de rotation, un convertisseur numérique-analogique alimenté par le signal de rampe issu de l'accumulateur et commandant le modulateur de phase, le système de traitement numérique classant alternativement les échantillons numérisés dans deux classes dont il effectue les moyennes qu'il compare ensuite pour en déduire le signal d'erreur et le signal de contre-réaction étant une rampe numérique dont la pente est fonction du paramètre mesuré.

L'invention concerne également un gyromètre conforme au dispositif de mesure défini plus haut dans lequel le paramètre mesuré est la vitesse de rotation de l'interféromètre autour de son axe.

L'invention concerne encore une centrale de navigation ou de stabilisation inertielle comportant au moins un gyromètre tel que défini plus haut.

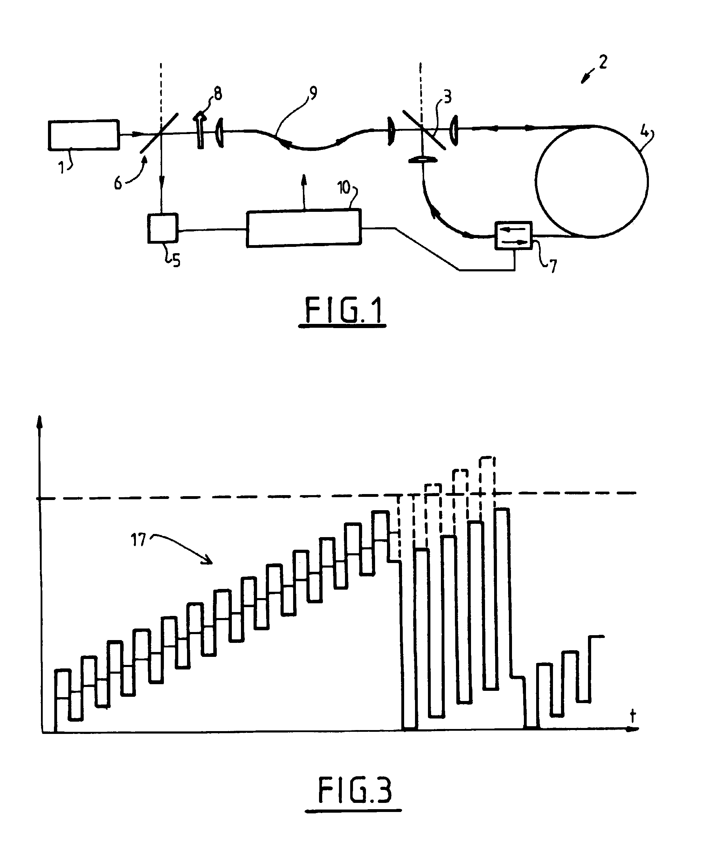

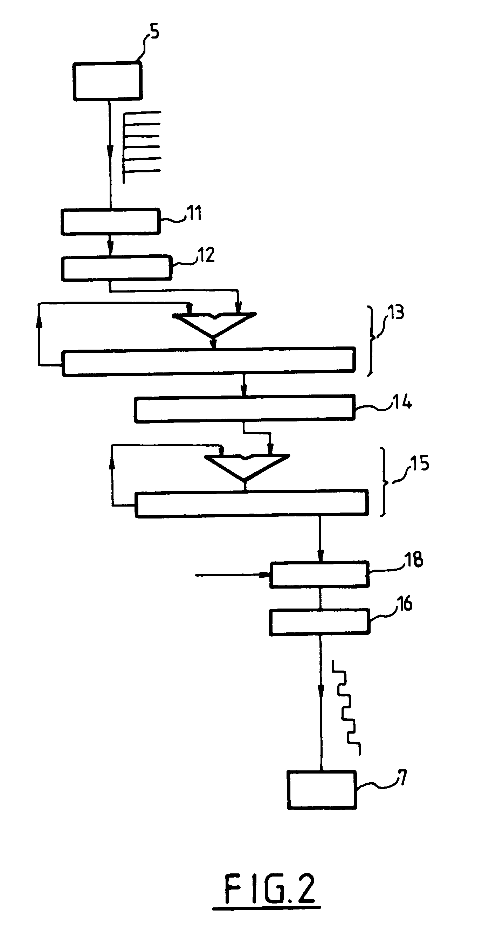

L'invention sera mieux comprise à la lecture de la description qui va suivre faite en référence aux dessins dans lesquels :
. La figure 1 est un dispositif de mesure connu à base d'un interféromètre à anneau de SAGNAC.
. La figure 2 représente les moyens électroniques de traitement numérique du signal selon l'invention.
. La figure 3 représente le signal de modulation analogique résultant après conversion de l'addition numérique du signal numérique de contre-réaction dans le cas particulier où il est une rampe et de la modulation carrée.

Le dispositif de mesure à fibre optique de l'invention comporte une source lumineuse quasi-monochromatique 1 qui est le plus souvent un laser ou une diode super luminescente, un interféromètre en anneau de SAGNAC à fibre optique monomode globalement désigné par la référence 2.

Cet interféromètre en anneau 2 comporte une lame séparatrice 3 assurant la séparation des ondes à l'entrée de l'interféromètre puis leur recombinaison à la sortie, un chemin optique fermé 4 constitué par une fibre optique monomode enroulée sur elle-même.

Ce dispositif de mesure comporte également un détecteur 5 fournissant un signal fonction de l'état d'interférence des ondes à la sortie de l'interferomètre lui-même.

Le signal optique est fourni au détecteur 5 par l'intermédiaire d'un séparateur 6 par exemple constitué d'une lame semi-transparente.

L'interféromètre est réglé de telle sorte que les ondes sont parallèles lors de leur recombinaison le signal fourni par détecteur étant ainsi fonction du déphasage entre ces deux ondes.

Sur le chemin optique de l'interféromètre est interposé un modulateur 7 qui commandé à partir d'un signal électrique est susceptible d'introduire un déphasage donné aux deux ondes. Le fonctionnement de l'interféromètre est amélioré en interposant entre la source lumineuse 1 et l'entrée de l'anneau, c'est-à-dire la lame séparatrice 3, un polariseur 8 et un filtre spatial 9. De manière connue, ce filtre spatial est constitué par une fibre optique monomode.

Dans la suite nous utiliserons indifféremment les termes de "déphasage" et de "différence de marche" pour désigner les effets physiques produits dans l'interféromètre.

Des moyens électroniques 10 commandent en contre-réaction le modulateur de phase 7 en fonction du signal reçu du détecteur 5.

Ces moyens électroniques 10 sont configurés de telle sorte que d'une part la variation du signal d'erreur démodulé en fonction de la différence de marche produit entre les deux ondes au voisinage du zéro soit sinusoïdale. Cette disposition permet d'obtenir une très bonne sensibilité de la variation du signal d'erreur démodulé au voisinage du zéro de la différence de marche alors qu'il est aisément compréhensible que lorsque la dépendance du signal par rapport à la différence de marche est de forme cosinusoïdale la sensibilité au voisinage de zéro de la différence de marche est très faible.

D'autre part, ces moyens électroniques 10 ont pour fonction de maintenir la différence de marche nulle. C'est-à-dire que lorsque la variation du paramètre mesuré introduit un déphasage entre les deux ondes dans l'interféromètre, ce déphasage produit une variation du signal émis par le détecteur 5 entraînant par l'intermédiaire des moyens électroniques 10 et du modulateur de phase 7 une action égale et de sens inverse au déphasage initialement produit de telle sorte que le déphasage global est ramené à la valeur 0.

Enfin, ces moyens électroniques 10 fournissent par exploitation du signal de commande du modulateur de phase 7 un signal fonction de la variation du paramètre mesuré.

Selon l'invention, les moyens électroniques 10 comportent un convertisseur analogique-numérique Il destiné à numériser le signal émis par le détecteur. Le signal numérique issu de ce convertisseur analogique-numérique est transmis à un système de traitement numérique 12 exploitant ce signal et ramenant sa composante à la fréquence de modulation autour du continu de manière à extraire le signal réellement significatif. C'est un élément important de l'invention de réaliser la numérisation du signal à la sortie du détecteur avant de réaliser son traitement numérique.

Les moyens électroniques 10 comportent un filtre numérique de boude d'asservissement 13 qui est alimenté par le signal faible sortant du système de traitement numérique qui assure un fonctionnement à erreur faible, temps de réponse faible et bonne stabilité de l'asservissement Ce peut être un accumulateur numérique. Ce fitre 13 fournit un signal représentatif du paramètre mesuré.

Les moyens électroniques 10 comportent un registre 14 recevant le signal sortant du fitre numérique 13 fournissant un signal fonction du paramètre mesuré pour tout usage externe souhaité.

Un accumulateur 15 alimenté par le signal sortant du registre 14 génère un signal de contre réaction fonction du paramètre mesuré.

De préférence le signal de contre réaction est une rampe numérique 17 dont la pente est fonction du paramètre mesuré. Après adjonction d'une modulation par l'additionneur numérique 18, un convertisseur numérique analogique 16 alimenté par signal de rampe 17 issu de l'accumulateur 15 commande le modulateur de phase 7.

Le fonctionnement du dispositif de mesure de l'invention est le suivant : Lorsque le paramètre mesuré est stable, les moyens électroniques de commande 10 introduisent par l'intermédiaire du modulateur de phase 7 une modulation d'amplitude constante du déphasage entre les ondes contrapropagatives au sein de l'anneau 4. Le détecteurs 5 produit donc un signal modulé qui est numérisé par le convertisseur 11 puis traité par le système de traitement numérique 12, qui fournit un signal nul à l'accumulateur 15 maintenant le registre 14 à une valeur constante ce qui maintient la rampe 17 en son état et maintient donc le signal fourni au modulateur 7. On vérifie ainsi que cet état est stable.

Lors d'une variation du paramètre mesuré, un déphasage constant se superpose au déphasage périodique correspondant à l'état stable entre les ondes contrapropagatives au niveau de l'anneau 4. Le signal alors fourni par détecteur après numérisation par 'échantillonneur 11 et traitement par le système de traitement numérique 12 a donc un niveau différent de zéro qui produit une alimentation au niveau de l'accumulateur 15 et une variation du registre paramètre 14. Cette variation entraîne une modification de la rampe générée au niveau 15 et donc du déphasage introduit par le modulateur 7 ramenant ainsi le déphosage entre les ondes contrapropagatives à la sortie de l'anneau 4 à une valeur nulle à l'exception de la modulation périodique mentionnée plus haut.

On comprend ainsi que l'échantillonnage proposé selon l'invention avant le traitement numérique est appliqué à un signal fonction de la variation du paramètre mesuré et non pas de la valeur absolue de ce paramètre. Cela permet l'utilisation d'un échantillonneur traitant un nombre de bits limité par exemple 8 tout en maintenant la précision et la qualité de la mesure.

Selon un mode de réalisation préféré, le système de traitement numérique 12 de l'invention dasse alternativement les échantillons numérisés dans deux classes dont il effectue les moyennes numériques qu'il compare ensuite pour en déduire le signal d'erreur. Cette disposition permet d'éviter les effets d'une dérive de zéro éventuelle. Une telle disposition est rendue possible par la numérisation du signal avant son traitement numérique.

La neutralisation de cette dérive est d'autant plus importante que dans ce type d'appareil de mesure il est souvent réalisé une intégration du paramètre mesuré sur une longue période qui est très sensible aux dérives de zéro.

Sur la figure 3 est représentée l'addition numérique de la rampe et de la modulation carrée 17 qui compose le signal d'excitation élaboré par les moyens électroniques 10 pour commander le modulateur de phase 7, dans un état où le paramètre mesuré est constant. Sur ce graphique le temps est représenté en abscisse et le déphasage en ordonnée. La valeur du paramètre mesuré est fonction du déphasage existant entre deux périodes successives de la fonction carrée. La partie droite de ce graphique représente les phénomènes connus en eux-mêmes intervenant lors du débordement d'un registre mis en oeuvre lors de la génération de la rampe.

Selon un mode de réalisation préférentiel, le dispositif de mesure de l'invention est caractérisé en ce que l'échantilloneur fonctionne à une fréquence approximative de 1 MHz pour une longueur de fibre égale à 200m environ.

Dans de telles conditions, le dispositif de l'invention qui permet de réduire la dynamique d'échantillonnage permet l'utilisation d'un convertisseur analogique-numérique par exemple 8 bits alors que le registre 14 contenant la valeur du paramètre mesuré assure une précision correspondant à sa dimension qui est de 17 à 26 bits environ.

La réalisation d'un registre de cette dimension est peu contraignante puisque, en logique cablée il peut être obtenu avec plusieurs additionneurs, par exemple des additionneurs 8 bits en parallèle.

Le dispositif de mesure de l'invention est particulièrement bien adapté à la réalisation d'un gyromètre. Dans ce cas, le paramètre mesuré est la vitesse de rotation de l'interféromètre autour de son axe.

Ce gyromètre entre avantageusement dans la réalisation de systèmes de contrôle de navigation ou de stabilisation inertielle.

Une telle disposition est également très bien adaptée à la réalisation du dispositif de mesure de champs magnétiques et de courant électrique en mettant à profit l'effet FARADAY.

## Revendications

1. Dispositif de mesure à fibre optique du type dans lequel la variation d'un paramètre engendre une différence de marche comportant :
- une source lumineuse quasi-monochromatique (1),
- un interféromètre en anneau de SAGNAC (2) à fibre optique de préférence monomode,
- un photodétecteur (5),
- un modulateur de phase (7),
- un polariseur (8) et un filtre spatial (9) placés entre la source (1) et l'interféromètre (2),
- des moyens électroniques (10) commandant en contre-réaction le modulateur (7) de phase en fonction du signal reçu du détecteur (5) de telle sorte que, d'une part, la variation du signal d'erreur démodulé en fonction de la différence de marche au voisinage du zéro soit sinusoïdale, que, d'autre part, cette différence de marche soit maintenue nulle et fournissant par exploitation du signal de commande du modulateur un signal fonction de la variation du paramètre mesuré,
dans lequel lesdits moyens électroniques comportent, dans l'ordre :
- un convertisseur analogique-numérique (11) destiné à numériser le signal modulé émis par le détecteur (5),
- un système à traitement numérique (12) exploitant le signal fourni par le convertisseur (11) et ramenant autour du continu sa composante à la fréquence de la modulation,
- un filtre numérique de boucle d'asservissement (13) alimenté par le signal sortant du système de traitement numérique (12), fournissant un signal représentatif du paramètre mesuré,
- un registre (14) recevant le signal sortant du filtre numérique de boucle d'asservissement (13) et fournissant un signal fonction du paramètre mesuré pour tout usage externe souhaité,
- un accumulateur (15) alimenté par le signal sortant du registre (14), générant un signal de contre-réaction fonction du paramètre mesuré,
- un convertisseur numérique-analogique (16) alimenté par le signal de contre-réaction issu de l'accumulateur (15), après modulation par un additionneur (18), et commandant le modulateur de phase (7), le système de traitement numérique (12) classant alternativement les échantillons numérisés dans deux classes, dont il effectue les moyennes qu'il compare ensuite pour en déduire le signal d'erreur, le signal de contre-réaction étant une rampe (17) numérique, dont la pente est fonction du paramètre mesuré.

2. Dispositif de mesure selon la revendication 1, caractérisé en ce que l'échantillonneur analogique-numérique (11) fonctionne à une fréquence approximative de 1 MHz correspondant à un temps d'échantillonnage de 1 µs, dans le cas d'une longueur de fibre égale à 200 m environ.

3. Dispositif de mesure selon l'une quelconque des revendications 1 à 2, caractérisé en ce que le registre (14) contient de 17 à 26 bits et que le convertisseur (11) contient de 7 à 9 bits.

4. Gyromètre, caractérisé en ce qu'il est conforme au dispositif de mesure de l'une quelconque des revendications 1 à 3 le paramètre mesuré étant la vitesse de rotation de l'interféromètre autour de son axe.

5. Contrôle de navigation ou de stabilisation inertielle, comportant au moins un gyromètre, selon la revendication 4.

6. Capteur de courant et de champ magnétique, caractérisé en ce qu'il est conforme au dispositif de mesure de l'une quelconque des revendications 1 à 3, la variation de la différence de marche étant produite par le paramètre mesuré par effet FARADAY.

## Patentansprüche

1. Fiberoptische Meßvorrichtung des Typs, bei dem eine Veränderung eines Parameters eine Differenz der optischen Wege bewirkt, mit :
- einer quasimonochromatischen Lichtquelle (1),
- einem SAGNAC-Ringinterferometer (2), vorzugsweise mit optischen Monomode-Fasern,
- einem Photodetektor (5),
- einem Phasenmodulator (7),
- einem Polarisator (8) und einem Raumfilter (9), die zwischen der Quelle (1) und dem Interferometer (2) angeordnet sind,
- einer elektronischen Einrichtung (10), welche die Rückkopplung des Phasenmodulators (7) in Abhängigkeit von dem von dem Detektor (5) empfangenen Signal derart steuert, daß, einerseits, die Veränderung des in Abhängigkeit von der Differenz der optischen Wege demodulierten Fehlersignals nahe dem Nullpunkt sinusförmig ist, und andererseits diese Differenz der optischen Wege auf Null gehalten wird, und welche unter Verwendung des Steuersignals des Modulators ein Signal in Abhängigkeit von der Veränderung des gemessenen Parameters liefert,
wobei die elektronische Einrichtung in folgender Reihenfolge aufweist:
- einen Analog-/Digitalwandler (11) zum Digitalisieren des von dem Detektor (5) ausgegebenen modulierten Signals,
- ein System (12) zur digitalen Verarbeitung, welches das von dem Wandler (11) gelieferte Signal auswertet - und um die Kontinuierliche seine Komponente im weiteren Verlauf auf die Modulationsfrequenz reduziert
- einen Digitalfilter eines Regelkreises (13), dem das von dem System (12) zur digitalen Verarbeitung ausgegebene Signal zugeführt wird und das ein den gemessenen Parameter repräsentierendes Signal liefert,
- ein Register (14), das das von dem Digitalfilter des Regelkreises (13) ausgegebene Signal empfängt und ein Signal in Abhängigkeit von dem gemessenen Parameter ausgibt, das für jeden gewünschten Zweck verwendbar ist,
- ein Akkumulator (15), dem das Signal des Registers (14) zugeführt wird, und der ein Rückkopplungssignal in Abhängigkeit von dem gemessenen Parameter liefert,
- einen Digital-/Analogwandler (16), dem das Rückkopplungssignal des Akkumulators (15) nach Modulation durch einen Addierer (18) zugeführt wird, und der den Phasenmodulator (7) steuert,
wobei das System (12) zur digitalen Verarbeitung die digitalisierten Muster alternativ in zwei Klassen einordnet, aus denen es die Mittelwerte bildet, welche anschließend zur Herleitung des Fehlersignals verglichen werden, und
das Rückkopplungssignal eine digitale Rampe (17) ist, deren Neigung eine Funktion des gemessenen Parameters ist.

2. Meßvorrichtung nach Anspruch 1, dadurch gekennzeichnet, daß der AnalogDigitalprobenehmer (11) bei einer Faserlänge von ungefähr 200m mit einer Frequenz von ungefähr 1MHz arbeitet, was einer Probenahmezeit von einer µs entspricht.

3. Meßvorrichtung nach Anspruch 1 oder 2, dadurch gekennzeichnet, daß das Register (14) zwischen 17 und 26 Bits und der Wandler (11) zwischen 7 und 9 Bits aufweist.

4. Gyrometer, dadurch gekennzeichnet, daß es der Meßvorrichtung nach einem der Ansprüche 1 bis 3 entspricht, wobei der gemessene Parameter die Rotationsgeschwindigkeit des Interferometers um seine Achse ist.

5. Navigations- und Trägheitsstabilisierungssteuerungsvorrichtung mit mindestens einem Gyrometer nach Anspruch 4.

6. Strom- und Magnetfeldfühler, dadurch gekennzeichnet, daß er der Meßvorrichtung nach einem der Ansprüche 1 bis 3 entspricht, wobei die Veränderung der Phasenverschiebung durch den mittels des Faradayeffekts gemessenenen Parameter bewirkt wird.

## Claims

1. Fibre optic measuring device of the type in which the variation of a parameter engenders a path difference including:
- a quasi-monochromatic light source (1),
- a SAGNAC ring interferometer (2) with preferably monomode optical fibre,
- a photodetector (5),
- a phase modulator (7),
- a polariser (8) and a spacial filter (9) which are placed between the source (1) and the interferometer (2),
- electronic means (10) controlling the phase modulator (7) in negative feedback mode as a function of the signal received from the detector (5) in such a way that, on the one hand, the variation of the demodulated error signal as a function of the path difference in the neighbourhood of zero is sinusoidal, and that, on the other hand, this path difference is kept zero and providing, by exploiting the modulator control signal, a signal dependent on the variation of the measured parameter,
in which the said electronic means include, in order :
- an analog-digital converter (11) intended to digitise the modulated signal emitted by the detector (5),
- a digital processing system (12) exploiting a signal provided by the converter (11) and bringing its component at the frequency of the modulation back around the continuous,
- a servo-control loop digital filter (13) fed with the signal leaving the digital processing system (12), providing a signal representing the measured parameter,
- a register (14) receiving the signal leaving the servo-control loop digital filter (13) and providing a signal dependent on the measured parameter for any desired external use,
- an accumulator (15) fed with the signal leaving the register (14), generating a negative-feedback signal dependent on the measured parameter,
- a digital-analog convertor (16) fed with the negative-feedback signal output by the accumulator (15), after modulation by an adder (18), and controlling the phase modulator (7),
the digital processing system (12) classifying the digitised samples alternatively into two classes, whose averages it forms and later compares in order to deduce the error signal therefrom, and
the negative-feedback signal being a digital ramp (17) whose slope depends on the measured parameter.

2. Measuring device according to claim 1, characterized in that the analog-digital sampler (11) operates at a frequency of approximately 1 MHz corresponding to a sampling time of 1 µs, in the case of a fibre length equal to around 200 m.

3. Measuring device according to any one of claims 1 or 2, characterized in that the register (14) contains from 17 to 26 bits and in that the converter (11) contains from 7 to 9 bits.

4. Rate gyro, characterized in that it conforms with the measuring device of any one of claims 1 to 3, the measured parameter being the speed of rotation of the interferometer about its axis.

5. Control of navigation or of inertial stabilization, including at least one rate gyro according to claim 4.

6. Current and magnetic field sensor, characterized in that it conforms with the measuring device of any one of claims 1 to 3, the variation of the path difference being produced by the parameter measured by the FARADAY effect.
